# EUROPÄISCHE PATENTSCHRIFT

(11) **EP 0 585 655 B1**
(45) Veröffentlichungstag und Bekanntmachung des Hinweises auf die Patenterteilung: **27.12.1996**
(21) Anmeldenummer: 93112685.8
(22) Anmeldetag: 07.08.1993
(51) Int. Cl.: G05B 19/39

(54) **Vorrichtung und Verfahren zur Lageregelung eines beweglichen Teils**
Method and device for position control of a movable member
Méthode et dispositif de régulation de la position d'un organe mobile

(30) Priorität: 03.09.1992 DE 4229439
(43) Veröffentlichungstag der Anmeldung: 09.03.1994
(73) Patentinhaber: ROBERT BOSCH GMBH, 70442 Stuttgart (DE)
(72) Erfinder: Seiler, Hartmut, Dipl.-Phys., W-7570 Baden-Baden (DE); Voehringer, Klaus, Dipl.-Ing., W-7502 Malsch (DE); Spinner, Klaus, E-7580 Buehl-Neusatz (DE)

(56) Entgegenhaltungen:
- EP-A- 0 185 776
- EP-A- 0 302 476
- DE-A- 3 721 028
- DE-A- 3 829 405
- DE-B- 1 189 627
- FR-A- 2 544 097
- GB-A- 2 118 739

## Beschreibung

### Stand der Technik

Die Erfindung betrifft eine Vorrichtung zur Lageregelung eines beweglichen Teils und ein Verfahren zur Lageregelung eines bewegbaren Teil. Aus der DE-OS 38 29 405 ist eine Betätigungseinrichtung für elektromotorisch bewegbare Teile bekannt, die eine Lageregelung enthält. Als Lagegeber ist zusätzlich zu einem inkrementellen Geber ein Absolutwert-Lagegeber vorgesehen. Die Geber sind in ihrer Stellung zueinander durch Getriebeelemente festgelegt. Der Absolutwert-Lagegeber gibt beim Erreichen einer bestimmten Lage ein Signal ab. Der Absolutwert-Lagegeber kann auch so ausgebildet sein, daß er in einem festen Abstand nach beiden Seiten von der bestimmten Lage jeweils ein Signal abgibt. Die vom Absolutwert-Lagegeber abgegebenen Signale kennzeichnen einen Referenzwert der Lage des beweglichen Teils. Bei jedem Auftreten des Referenzwertes wird das Lagesignal kalibriert. Das vom inkrementellen Lagegeber abgegebene Signal kann damit einem Absolutwert der Lage zugeordnet werden.

Wird das bewegliche Teil bei einem Stromausfall der Lageregelung von Hand verstellt, dann stimmt die vom inkrementellen Geber abgeleitete Lage nicht mehr mit der tatsächlichen Lage überein. Bei einer anschließenden Inbetriebnahme kann die Kalibrierung nur erfolgen, wenn der Referenzwert ein erstes Mal erfaßt wird. Es sind daher Betriebssituationen nicht auszuschließen, in denen das bewegliche Teil in einen Bereich außerhalb einer zulässigen Lage gerät und beispielsweise gegen einen mechanischen Anschlag drückt, beschädigt oder funktionsunfähig wird.

Der Erfindung liegt die Aufgabe zugrunde, eine Vorrichtung zur Lageregelung mit einem Lagegeber, der einen inkrementellen Geber und einen Absolutwert-Geber enthält, anzugeben, bei der ein Anfahren von mechanischen Endanschlägen nicht auftritt. Weiterhin liegt der Erfindung die Aufgabe zugrunde, ein Verfahren zur Lageregelung eines bewegbaren Teils anzugeben, das von der Vorrichtung zur Lageregelung ausgeführt wird.

Die Aufgabe wird durch die in den unabhängigen Ansprüchen angegebenen Merkmale gelöst.

### Vorteile der Erfindung

Die erfindungsgemäße Vorrichtung weist den Vorteil auf, daß durch die Ausgestaltung des Absolutwert-Gebers das Lagesignal sowohl bei einem Referenzwert als auch bei zwei weiteren vorgebbaren Werten kalibrierbar ist. Eine Zuordnung der weiteren vorgebbaren Werte zu jeweils den mechanischen Endanschlägen des beweglichen Teils ermöglicht jeweils eine erneute Kalibrierung in der Nähe der Anschläge. Ein unzulässiges Anfahren eines mechanischen Anschlags kann daher selbst dann, wenn die Kalibrierung auf den Referenzwert verloren gegangen sein sollte, verhindert werden.

Vorteilhafte Weiterbildungen und Verbesserungen der erfindungsgemäßen Vorrichtung ergeben sich aus Unteransprüchen.

Der inkrementelle Geber wird vorzugsweise als Magnetsensor realisiert, bei dem Permanentmagnet-Segmente mit einem oder mehreren magnetfeldempfindlichen Sensoren zusammenwirken. Der Einsatz von zwei magnetfeldempfindlichen Sensoren ermöglicht die Detektierung der Verstellrichtung des beweglichen Teils.

Eine vorteilhafte Ausgestaltung des Absolutwert-Gebers sieht dessen Realisierung mit vier Permanentmagnet-Segmenten vor, die mit einem magnetfeldempfindlichen Sensor zusammenwirken.

Eine andere vorteilhafte Ausgestaltung des Absolutwert-Gebers sieht dessen Realisierung mittels einer Nockenscheibe vor, die zwei Nocken enthält, die mit einem Schalter zusammenwirken.

Das erfindungsgemäße Verfahren zur Lageregelung eines bewegbaren Teils weist ebenfalls den Vorteil auf, daß das bewegliche Teil trotz Verlust der Kalibrierung beim Referenzwert nicht gegen einen der mechanischen Anschläge läuft. Bei einer Änderung des vom Absolutwert-Geber abgegebenen Signals, das einem der beiden weiteren vorgebbaren Werte entspricht, wird der Antrieb gestoppt, die Antriebsrichtung umgekehrt und nach einer erneuten Signaländerung des Lagesignal kalibriert.

Vorteilhafte Weiterbildungen und Verbesserungen des erfindungsgemäßen Verfahrens zur Lageregelung eines bewegbaren Teils ergeben sich aus Unteransprüchen.

Mit der vorteilhaften Maßnahme, daß nach der erneuten Signaländerung, bei der eine Kalibrierung stattfindet, der Antrieb noch für eine vorgebbare Zeit nachläuft, wird das bewegbare Teil mit Sicherheit in den zugelassenen Lagebereich gebracht.

Die erfindungsgemäße Vorrichtung und das erfindungsgemäße Verfahren eignen sich besonders zur Verwendung bei Verstellantrieben in Kraftfahrzeugen. Solche Antriebe sind beispielsweise bei Schiebe-Hebe-Dächern vorgesehen, wobei der Referenzwert vorzugsweise der Lage der geschlossenen Stellung des Daches entspricht.

Weitere vorteilhafte Weiterbildungen der erfindungsgemäßen Vorrichtung und des erfindungsgemäßen Verfahrens ergeben sich aus weiteren Unteransprüchen in Verbindung mit der folgenden Beschreibung.

### Zeichnung

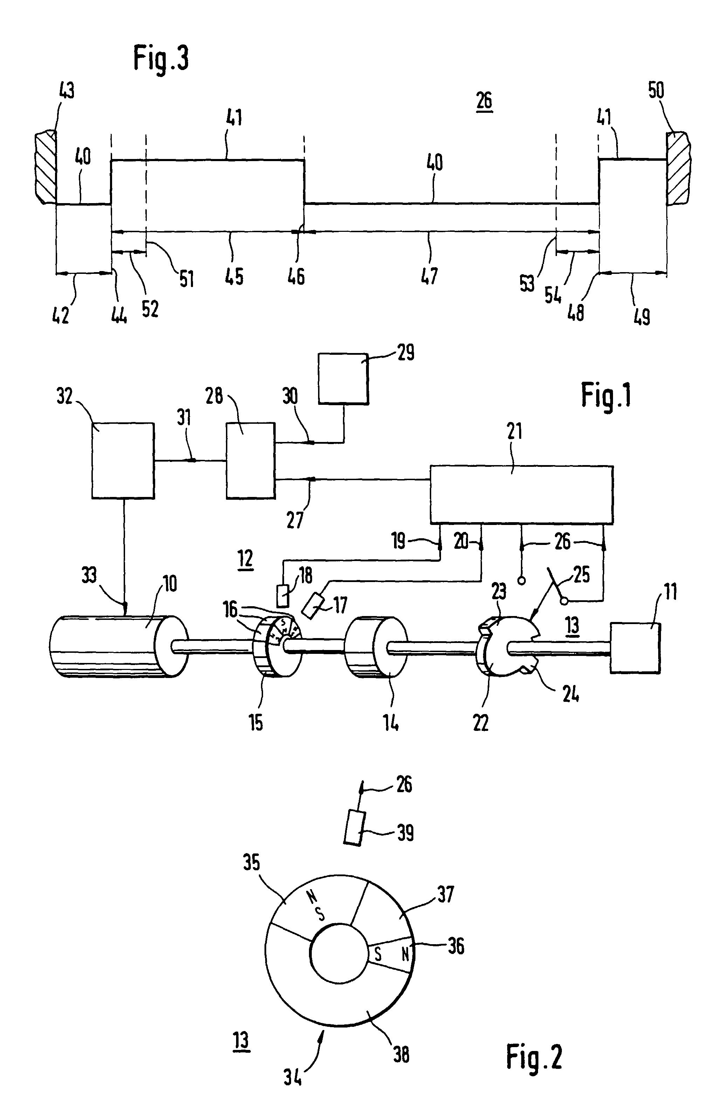

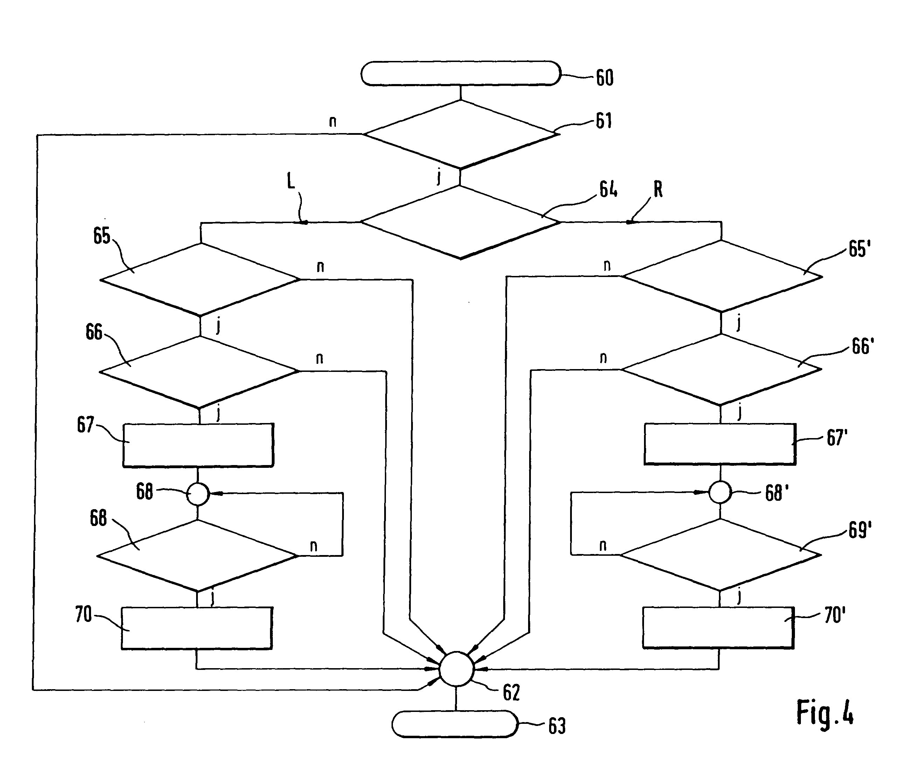

Figur 1 zeigt ein Blockschaltbild einer erfindungsgemäßen Lageregelung, Figur 2 zeigt ein Ausführungsbeispiel eines Absolutwert-Lagegebers, Figur 3 zeigt ein vom Absolutwert-Lagegeber abgegebenes Signal in Abhängigkeit vom Ort und Figur 4 zeigt ein Flußdiagramm eines erfindungsgemäßen Verfahrens zum Betreiben einer Lageregelung.

Figur 1 zeigt einen Elektromotor 10 als Antrieb eines bewegbaren Teils 11, dessen Lage zu regeln ist. Die Lage des Teils 11 wird von einem inkrementellen Lagegeber 12 und von einem Absolutwert-Lagegeber 13 erfaßt. Die beiden Geber 12, 13 sind durch ein Getriebe 14 miteinander verbunden.

Der inkrementelle Lagegeber 12 enthält eine vom Elektromotor 10 bewegte Scheibe 15, die Permanentmagnet-Segmente 16 enthält. Benachbart zu den Segmenten 16 sind zwei magnetfeldempfindliche Sensoren 17, 18 angeordnet. Die Sensoren 17, 18 geben inkrementelle Lagesignale 19, 20 an eine Lageistwert-Ermittlung 21 ab.

Der Absolutwert-Lagegeber 13 ist im Ausführungsbeispiel als Nockenscheibe 22 gezeigt, die eine erste Nocke 23 und eine zweite Nocke 24 enthält. Die Nocken 23, 24 wirken mit Schaltmitteln 25 zusammen, die ein Absolutwert-Lagesignal 26 an die Lageistwert-Ermittlung 21 abgeben.

Ein von der Lageistwert-Ermittlung 21 abgegebenes Lage-Istsignal 27 wird in einem Regler 28 mit einem von einem Lagesollwert-Geber 29 abgegebenen Lagesollwert-Signal 30 verglichen. Der Regler 28 gibt ein Lageregelungs-Signal 31 an eine Stelleinrichtung 32 ab, die ein Stellsignal 33 für den Elektromotor 10 erzeugt.

Figur 2 zeigt eine alternative Ausgestaltung des Absolutwert-Lagegebers 13. Anstelle der Nockenscheibe ist eine Scheibe 34 vorgesehen, die Permanentmagnet-Segmente 35, 36 entsprechend den Nocken 23, 24 enthält. Zwischen den Permanent-Segmenten 35, 36 sind unmagnetische Segmente 37, 38 angeordnet. Die Permanentmagnet-Segmente 35, 36 wirken mit einem magnetfeldempfindlichen Sensor 39 zusammen, der das Absolutwert-Lagesignal 26 an die Lageistwert-Ermittlung 21 abgibt, die in Figur 2 nicht eingetragen ist.

In Figur 3 ist das vom Absolutwert-Lagegeber 13 abgegebene Absolutwert-Lagesignal 26 in Abhängigkeit von der Lage aufgetragen. Das Absolutwert-Lagesignal 26 weist entweder ein erstes Signal 40 oder ein zweites Signal 41 auf. Das erste Signal 40 tritt in einem ersten Lagebereich 42 auf, der von einem ersten mechanischen Anschlag 43 des bewegbaren Teils 11 und von einem ersten vorgebbaren Lagewert 44 begrenzt ist. Benachbart zum ersten Lagebereich 42 ist ein zweiter Lagebereich 45, der vom ersten vorgebbaren Lagewert 44 und von einem Referenzwert 46 begrenzt ist. Dem zweiten Lagebereich 45 ist das zweite Signal 41 zugeordnet. An den zweiten Lagebereich 45 schließt sich ein dritter Lagebereich 47 an, der vom Referenzwert 46 und von einem zweiten vorgebbaren Lagewert 48 begrenzt ist. Dem dritten Lagebereich 47 ist das erste Signal 40 zugeordnet. An den dritten Lagebereich 47 schließt sich ein vierter Lagebereich 49 an, der vom zweiten vorgebbaren Lagewert 48 und von einem zweiten mechanischen Anschlag 50 des bewegbaren Teils 11 begrenzt ist. Dem vierten Lagebereich 49 ist das zweite Signal 41 zugeordnet.

Innerhalb des zweiten Lagebereichs 45 liegt ein erster vorgebbarer Endanschlag des bewegbaren Teils 11, der einen Abstand 52 zum ersten vorgebbaren Lagewert 44 aufweist. Im dritten Lagebereich 47 liegt ein zweiter vorgebbarer Endanschlag 53 des bewegbaren Teils 11, der einen Abstand 54 zum zweiten vorgebbaren Lagewert 48 aufweist.

Die erfindungsgemäße Vorrichtung zur Lageregelung des bewegbaren Teils 11 arbeitet folgendermaßen:

Das vom Lagesollwert-Geber 29 abgegebene Lagesollwert-Signal 30 wird im Regler 28 mit dem von der Lageistwert-Ermittlung 21 abgegebenen Lageistwert-Signal 27 verglichen. Eine Regelabweichung führt zur Ausgabe des Lageregelungs-Signals 31, das die Stelleinrichtung 32 in das Stellsignal 33 für den Elektromotor 10 umsetzt. Die Stelleinrichtung 32 enthält beispielsweise eine nicht näher gezeigte Brückenschaltung, in deren Diagonale der Elektromotor 10 geschaltet ist. Ein gleichzeitiges Einschalten von jeweils diagonal gegenüberliegenden Brückenzweigen bewirkt das Drehen des Elektromotors 10 entweder in der einen oder in der anderen Richtung. Der Elektromotor 10 ist Teil des gesamten Antriebs für das bewegbare Teil 11, dessen Lage mittels der beiden Lagegeber 12, 13 ermittelt wird. Der inkrementelle Geber 12 ist im Ausführungsbeispiel als magnetischer Sensor angegeben, der die Scheibe 15 enthält, welche die zumindest am Umfang angeordneten Permanentmagnet-Segmente 16 aufweist. Die von den Permanentmagneten ausgehenden Felder werden von den magnetfeldempfindlichen Sensoren 17, 18 detektiert, die daraufhin die inkrementellen Lagesignale 19, 20 abgeben. Die Verwendung von zwei Sensoren 17, 18 ermöglicht die Detektierung der Drehrichtung. Für die Grundfunktion reicht ein Sensor aus. Anstelle der im Ausführungsbeispiel gezeigten radialen Magnetisierung der Permanentmagnete ist gleichermaßen eine axiale Magnetisierung geeignet, wobei dann die magnetfeldempfindlichen Sensoren 17, 18 in axialer Richtung zur Scheibe 15 angeordnet sind.

Der inkrementelle Lagegeber 12 ist vorzugsweise unmittelbar mit dem Elektromotor 10 verbunden. Bei einer Auslegung des Antriebs mit vergleichsweise hoher Drehzahl bezogen auf den Verstellweg des bewegbaren Teils 11 ist mit dieser Maßnahme eine hohe Ortsauflösung möglich. Die Lageistwert-Ermittlung 21 kann aus den inkrementellen Lagesignalen 19, 20 allein die absolute Lage des bewegbaren Teils 11 noch nicht ermitteln. Die fehlende Information über die absolute Lage erhält die Lageistwert-Ermittlung 21 vom Absolutwert-Lagegeber 13. Der Geber 13 ist im Ausführungsbeispiel gemäß Figur 1 als Nockenscheibe 22 mit zwei Nocken 23, 24 gezeigt. Die Nocken 23, 24 wirken mit den Schaltmitteln 25 zusammen, die das Absolut-Lagesignal 26 an die Lageistwert-Ermittlung 21 abgeben. Die Schaltmittel 25 sind beispielsweise als Mikroschalter realisierbar. Ein Überfahren einer Nockenflanke, die einer bestimmten Lage, beispielsweise einer Referenzlage des bewegbaren Teils 11 entspricht, löst einen Schaltvorgang aus, der detektierbar ist. Während des Betriebs kann somit bei jedem Überfahren einer Nockenflanke eine Kalibrierung der Lageregelung stattfinden.

Der Absolutwert-Lagegeber 13 kann in der beschriebenen Ausgestaltung als Nockenscheibe 22 ein eindeutiges Signal nur dann liefern, wenn der maximale Lageverstellweg des bewegbaren Teils 11 maximal einer Umdrehung der Nockenscheibe 22 entspricht. Zur Anpassung ist daher im allgemeinen das Getriebe 14 erforderlich.

Eine andere Ausgestaltung des Absolutwert-Lagegebers 13 ist in Figur 2 gezeigt. Anstelle der Nockenscheibe 22 ist die Scheibe 35 vorgesehen, welche die zwei Permanentmagnet-Segmente 35, 36 enthält, deren Positionen am Umfang der Scheibe denen der Nocken 23, 24 der Nockenscheibe 22 entsprechen. Die Permanentmagnet-Segmente 35, 36 wirken mit dem magnetfeldempfindlichen Sensor 39 zusammen, der das Absolutwert-Lagesignal 26 an die Lageistwert-Ermittlung 21 abgibt. Im gezeigten Ausführungsbeispiel sind die Permanentmagnet-Segmente 35, 36 in radialer Richtung magnetisiert. Eine axiale Magnetisierung und eine Anordnung des magnetfeldempfindlichen Sensors 39 auf einer Stirnseite der Scheibe 35 sind ebenfalls möglich. Zwischen den Permanentmagnet-Segmenten 35, 36 sind entweder die unmagnetischen Segmente 37, 38 oder ebenfalls Permanentmagnet-Segmente mit jeweils entgegengesetzter Magnetfeldpolarisierung angeordnet.

Das vom Absolutwert-Lagegeber 13 abgegebene Absolutwert-Lagesignal 26 ist in Figur 3 in Abhängigkeit von der Lage gezeigt. Dem maximalen Verstellweg des bewegbaren Teils 11 entsprechen vier vorgebbare Lagebereiche 42, 45, 47, 49, wobei dem ersten und dritten Lagebereich 42, 47 jeweils das erste vom Absolutwert-Lagegeber 13 abgegebene Signal 40 und dem zweiten und vierten Lagebereich 45, 49 jeweils das zweite Signal 41 zugeordnet sind. Im normalen Betrieb der Lageregelung ist bei jedem Erreichen des Referenzwertes 46 eine Kalibrierung des Wertes der absoluten Lage vorgesehen. Der Referenzwert 46 entspricht vorzugsweise einer Lage des bewegbaren Teils 11, die besonders genau einzuhalten ist. Auf die Lageistwert-Ermittlung 21 einwirkende Störungen während des Betriebs, beispielsweise hochfrequente elektrische Störungen oder beispielsweise Störungen in der Energieversorgung können während des Betriebs zu einem Verlust der Information über die absolute Lage oder zumindest zu einer Annahme einer fehlerhaften absoluten Lage führen. Die erfindungsgemäße Ausgestaltung des Absolutwert-Lagegebers 13 ermöglicht auch in diesen Fällen, bei denen der Referenzwert 46 nicht erreicht wird, eine Nachkalibrierung bei den beiden vorgebbaren Lagewerten 44, 48. Ein Anfahren des bewegbaren Teils 11 seiner mechanischen Endanschläge 43, 50 kann somit in jedem Fall verhindert werden. Die vorgebbaren Endanschläge 51, 53 des bewegbaren Teils 11 weisen vorzugsweise jeweils einen Abstand 52, 54 zum zugeordneten vorgebbaren Lagewert 44, 48 auf.

Das erfindungsgemäße Verfahren zur Lageregelung eines bewegbaren Teils wird anhand des in Figur 4 gezeigten Flußdiagrammes näher erläutet:

Die Vorrichtung zur Lageregelung führt das Verfahren zur Lageregelung eines bewegbaren Teils aus V.

Nach dem Start 60 des Verfahrens folgt eine Abfrage 61; die überprüft, ob der Elektromotor 10 überhaupt läuft. Falls der Elektromotor 10 nicht läuft, wird zu einem Knoten 62 gesprungen, der zum Ende des Verfahrens 63 führt. Falls der Elektromotor 10 läuft, wird in der nächsten Abfrage 64 die Drehrichtung des Elektromotors 10 festgestellt. Es wird hier angenommen, daß ein Linkslauf L eine Verstellung des bewegbaren Teils auf den ersten Anschlag 43 hin und ein Rechtslauf R eine Verstellung des bewegbaren Teils 11 auf den zweiten Anschlag 50 hin veranlaßt.

Bei einem festgestellten Linkslauf L wird in einer Abfrage 65 festgestellt, ob das bewegbare Teil 11 im zweiten Lagebereich 45 ist, bei dem das zweite Signal 41 auftritt. Falls dies nicht der Fall ist, wird zum Knoten 62 weitergesprungen, der zum Ende 63 führt. In diesem Betriebszustand besteht noch keine Gefahr, daß das bewegbare Teil 11 den ersten mechanischen Anschlag 43 erreichen könnte. Falls das zweite Signal 41 vorliegt, wird in der nächsten Abfrage 66 festgestellt, ob ein Signalwechsel stattfindet. Falls kein Wechsel stattfindet, wird zum Knoten 62 und somit zum Ende 63 weitergegangen. Falls ein Signalwechsel stattfindet, der anzeigt, daß das bewegbare Teil 11 den ersten vorgebbaren Lagewert 44 passiert hat, wird in einem Befehlsblock 67 das Anhalten des Elektromotors 10 veranlaßt. Weiterhin wird die Drehrichtung des Motors gewechselt. Nach Passieren eines Sprungziels 68 wird in einer Abfrage 69 festgestellt, ob wieder ein Signalwechsel vom ersten Signal 40 auf das zweite Signal 41 stattgefunden hat. Falls ein Wechsel stattgefunden hat, wird in einem Befehlsblock 70 eine Nachkalibrierung der absoluten Lage veranlaßt. Gegebenenfalls kann im Befehlsblock 70 ein Weiterlaufen des Motors für eine vorgebbare Zeit veranlaßt werden. Das Nachlaufen des Elektromotors 10 stellt sicher, daß das bewegbare Teil 11 innerhalb des zweiten Lagebereichs 45 liegt. Anschließend wird der Motor 10 abgeschaltet.

Bei einem festgestellten Rechtslauf R wird in einer Abfrage 65' festgestellt, ob das bewegbare Teil 11 im dritten Lagebereich 47 ist, bei dem das erste Signal 40 auftritt. Falls dies nicht der Fall ist, wird zum Knoten 62 weitergesprungen, der zum Ende 63 führt. In diesem Betriebszustand besteht noch keine Gefahr, daß das bewegbare Teil 11 den zweiten mechanischen Anschlag 50 erreichen könnte. Falls das erste Signal 40 vorliegt, wird in der nächsten Abfrage 66' festgestellt, ob ein Signalwechsel stattfindet. Falls kein Wechsel stattfindet, wird zum Knoten 62 und somit zum Ende 63 weitergegangen. Falls ein Signalwechsel stattfindet, der anzeigt, daß das bewegbare Teil 11 den zweiten vorgebbaren Lagewert 48 passiert hat, wird in einem Befehlsblock 67' das Anhalten des Elektromotors 10 veranlaßt. Weiterhin wird die Drehrichtung des Motors gewechselt. Nach Passieren eines Sprungziels 68' wird in einer Abfrage 69' festgestellt, ob wieder ein Signalwechsel vom zweiten Signal 41 auf das erste Signal 40 stattgefunden hat. Falls ein Wechsel stattgefunden hat, wird in einem Befehlsblock 70' eine Nachkalibrierung der absoluten Lage veranlaßt. Gegebenenfalls kann im Befehlsblock 70' ein Weiterlaufen des Motors für eine vorgebbare Zeit veranlaßt werden. Das Nachlaufen des Elektromotors 10 stellt sicher, daß das bewegbare Teil 11 innerhalb des dritten Lagebereichs 47 liegt. Anschließend wird der Motor 10 abgeschaltet.

Die erfindungsgemäße Vorrichtung und das erfindungsgemäße Verfahren eignen sich insbesondere zur Verwendung bei Verstellantrieben in Kraftfahrzeugen. Insbesondere in Kraftfahrzeugen sind Störeinflüsse auf die Lageistwert-Ermittlung 21 nicht auszuschließen. Neben hochfrequenten elektromagnetischen Störungen, die beispielsweise von einer Zündanlage einer Brennkraftmaschine ausgehen können, sind weitere Störungen über das Bordnetz möglich. Bei einem Ausfall des Bordnetzes oder einer sonstigen Störung der Lageregelung muß mit einem manuellen Eingriff am bewegbaren Teil 11 gerechnet werden. Ein derartiges manuelles Verstellen des bewegbaren Teils führt dazu, daß die Lageistwert-Ermittlung 21 die Information über die absolute Lage des bewegbaren Teils 11 verliert. Als Stellantriebe sind beispielsweise Fensterheber, Sitzverstellungen, Spiegelverstellungen oder insbesondere Schiebe-Hebe-Dächer vorgesehen. Der Referenzwert 46 entspricht bei einem Schiebe-Hebe-Dach vorzugsweise derjenigen Lage, bei der das Dach geschlossen ist. Der erste vorgebbare Endanschlag 51 entspricht dem Endanschlag im Hubbereich, während der zweite vorgebbare Endanschlag 53 dem Endanschlag im Schiebebereich entspricht. Das Dach ist über die beiden vorgebbaren Endanschläge 51, 53 bei einer erforderlichen Neukalibrierung der absoluten Lage in den ersten Lagebereich 42 oder in den vierten Lagebereich 49 bewegbar. Ein Anfahren der mechanischen Endanschläge 43, 50 ist jedoch unter allen Umständen zu vermeiden, um mechanische Beschädigungen auszuschließen.

## Patentansprüche

1. Vorrichtung zur Lageregelung eines bewegbaren Teils (11), mit einem Lagegeber, der einen inkrementellen Lagegeber (12) und einen Absolutwert-Lagegeber (13) enthält, mit einem Lagesollwert-Geber (29), einem Regler (28) und einem Antrieb (10), dadurch gekennzeichnet, daß der Absolutwert-Lagegeber (13)
- in einem ersten Lagebereich (42), der von einem ersten mechanischen Anschlag (43) des bewegbaren Teils (11) und von einem ersten vorgebbaren Lagewert (44) begrenzt ist, ein erstes Signal (40) abgibt,
- in einem zweiten Lagebereich (45), der vom ersten vorgebbaren Lagewert (44) und von einem Referenzwert (46) der Lage begrenzt ist, ein zweites Signal (41) abgibt,
- in einem dritten Lagebereich (47), der vom Referenzwert (46) der Lage und von einem zweiten vorgebbaren Lagewert (48) begrenzt ist, das erste Signal (40) abgibt und
- in einem vierten Lagebereich (49), der vom zweiten vorgebbaren Lagewert (48) und von einem zweiten mechanischen Anschlag (50) des bewegbaren Teils (11) begrenzt ist, das zweite Signal (41) abgibt.

2. Vorrichtung nach Anspruch 1, dadurch gekennzeichnet, daß der inkrementelle Lagegeber (12) mehrere Permanentmagnet-Segmente (16) enthält, die mit wenigstens einem magnetfeldempfindlichen Sensor (17, 18) zusammenwirken.

3. Vorrichtung nach Anspruch 1, dadurch gekennzeichnet, daß der Absolutwert-Lagegeber (13) eine Scheibe (22) mit zwei den geradzahligen oder ungeradzahligen Lagebereichen (42, 47; 45, 49) entsprechenden Nocken (23, 24) enthält, die mit Schaltmitteln (25) zusammenwirken.

4. Vorrichtung nach Anspruch 1, dadurch gekennzeichnet, daß der Absolutwert-Lagegeber zwei Permanentmagnet-Segmente (35, 36) enthält, die den geradzahligen oder ungeradzahligen Lagebereichen (42, 47; 45, 49) entsprechen, die mit einem magnetfeldempfindlichen Sensor (39) zusammenwirken.

5. Verfahren zur Lageregelung eines bewegbaren Teils (11) mittels einer Vorrichtung zur Lageregelung eines bewegbaren Teils (11), die mit einem Lagegeber, der einen inkrementellen Lagegeber (12) und einen Absolutwert-Lagegeber (13) enthält, mit einem Lagesollwert-Geber (29), mit einem Regler (28) und mit einem Antrieb (10), wobei der Absolutwert-Lagegeber (13)
- in einem ersten Lagebereich (42), der von einem ersten mechanischen Anschlag (43) des bewegbaren Teils (11) und von einem ersten vorgebbaren Lagewert (44) begrenzt ist, ein erstes Signal (40) abgibt,
- in einem zweiten Lagebereich (45), der vom ersten vorgebbaren Lagewert (44) und von einem Referenzwert (46) der Lage begrenzt ist, ein zweites Signal (41) abgibt,
- in einem dritten Lagebereich (47), der vom Referenzwert (46) der Lage und von einem zweiten vorgebbaren Lagewert (48) begrenzt ist, das erste Signal (40) abgibt,
- in einem vierten Lagebereich (49), der vom zweiten vorgebbaren Lagewert (48) und von einem zweiten mechanischen Anschlag (50) des bewegbaren Teils (11) begrenzt ist, das zweite Signal (41) abgibt,
ausgestattet ist,
wobei bei einer Lageänderung in Richtung (L, R) auf einen mechanischen Endanschlag (43, 50) hin, ausgehend von einem Lagebereich (45, 47), der benachbart zu dem vom mechanischen Endanschlag (43, 50) und dem vom vorgebbaren Lagewert (44, 48) begrenzten Lagebereich (42, 49) ist, und bei einer Änderung des Absolutwert-Lagesignals (26; 40, 41) der Elektromotor (10) gestoppt, die Antriebsrichtung (L, R) umgekehrt und nach einer erneuten Änderung des Absolutwert-Lagesignals (26; 40, 41) der Absolutwert der Lage kalibriert wird.

6. Verfahren nach Anspruch 5, dadurch gekennzeichnet, daß der inkrementelle Lagegeber (12) mehrere Permanentmagnet-Segmente (16) enthält, die mit wenigstens einem magnetfeldempfindlichen Sensor (17, 18) zusammenwirken.

7. Verfahren nach Anspruch 5, dadurch gekennzeichnet, daß der Absolutwert-Lagegeber (13) eine Scheibe (22) mit zwei den geradzahligen oder ungeradzahligen Lagebereichen (42, 47; 45, 49) entsprechenden Nochen (23, 24) enthält, die mit Schaltmitteln (25) zusammenwirken.

8. Verfahren nach Anspruch 5, dadurch gekennzeichnet, daß der Absolutwert-Lagegeber zwei Permanentmagnet-Segmente (35, 36) enthält, die den geradzahligen oder ungeradzahligen Lagebereichen (42, 47; 45, 49) entsprechen, die mit einem magnetfeldempfindlichen Sensor (39) zusammenwirken.

9. Verfahren nach einem der Ansprüche 5 bis 8, dadurch gekennzeichnet, daß nach der erneuten Änderung des Absolutwert-Lagesignals (26) der Elektromotor (10) für eine vorgebbare Zeit nachläuft.

10. Verfahren nach einem der Ansprüche 5 bis 8, dadurch gekennzeichnet, daß die vorgebbaren Endanschläge (51, 53) des bewegbaren Teils (11) vor den jeweils zugeordneten vorgebbaren Lagewerten (44, 48) liegen.

11. Verfahren nach einem der Ansprüche 5 bis 8, gekennzeichnet durch die Verwendung bei Verstellantrieben in Kraftfahrzeugen.

12. Verfahren nach Anspruch 11, gekennzeichnet durch die Verwendung bei Schiebe-Hebe-Dächern.

## Claims

1. Device for the positional control of a movable part (11), having a position encoder which contains an incremental position encoder (12) and an absolute position encoder (13), having a position setprint generator (29), a controller (28) and a drive (10), characterized in that the absolute position encoder (13)
- emits a first signal (40) in a first positional range (42), which is bounded by a first mechanical stop (43) of the movable part (11) and by a first predefinable position value (44),
- emits a second signal (41) in a second positional range (45), which is bounded by the first predefinable position value (44) and by a position reference value (46),
- emits the first signal (40) in a third positional range (47), which is bounded by the position reference value (46) and by a second predefinable position value (48), and
- emits the second signal (41) in a fourth positional range (49), which is bounded by the second predefinable position value (48) and by a second mechanical stop (50) of the movable part (11).

2. Device according to Claim 1, characterized in that the incremental position encoder (12) contains a plurality of permanent magnet segments (16) which interact with at least one magnetic field-sensitive sensor (17, 18).

3. Device according to Claim 1, characterized in that the absolute position encoder (13) contains a disc (22) having two cams (23, 24) which correspond to the even-numbered or odd-numbered positional ranges (42, 47; 45, 49) and interact with switching means (25).

4. Device according to Claim 1, characterized in that the absolute position encoder contains two permanent magnet segments (35, 36) which correspond to the even-numbered or odd-numbered positional ranges (42, 47; 45, 49) and interact with a magnetic field-sensitive sensor (39).

5. Method for the positional control of a movable part (11) by means of a device for the positional control of a movable part (11), which is equipped with a position encoder which contains an incremental position encoder (12) and an absolute position encoder (13), with a position set point generator (29), with a controller (28) and with a drive (10), the absolute position encoder (13)
- emitting a first signal (40) in a first positional range (42), which is bounded by a first mechanical stop (43) of the movable part (11) and by a first predefinable position value (44),
- emitting a second signal (41) in a second positional range (45), which is bounded by the first predefinable position value (44) and by a position reference value (46),
- emitting the first signal (40) in a third positional range (47), which is bounded by the position reference value (46) and by a second predefinable position value (48), and
- emitting the second signal (41) in a fourth positional range (49), which is bounded by the second predefinable position value (48) and by a second mechanical stop (50) of the movable part (11),
wherein, in the event of a positional change in the direction (L, R) towards a mechanical end stop (43, 50), starting from a positional range (45, 47) which is adjacent to that positional range (42, 49) that is bounded by the mechanical end stop (43, 50) and the predefinable position value (44, 48), and, in the event of a change in the absolute position signal (26; 40, 41), the electric motor (10) is stopped, the drive direction (L, R) is reversed and, following a renewed change in the absolute position signal (26; 40, 41), the absolute value of the position is calibrated.

6. Method according to Claim 5, characterized in that the incremental position encoder (12) contains a plurality of permanent magnet segments (16) which interact with at least one magnetic field-sensitive sensor (17, 18).

7. Method according to Claim 5, characterized in that the absolute position encoder (13) contains a disc (22) having two cams (23, 24) which correspond to the even-numbered or odd-numbered positional ranges (42, 47; 45, 49) and interact with switching means (25).

8. Method according to Claim 5, characterized in that the absolute position encoder contains two permanent magnet segments (35, 36) which correspond to the even-numbered or odd-numbered positional ranges (42, 47; 45, 49) and interact with a magnetic field-sensitive sensor (39).

9. Method according to one of Claims 5 to 8, characterized in that, following the renewed change in the absolute position signal (26), the electric motor (10) runs on for a predefinable time.

10. Method according to one of Claims 5 to 8, characterized in that the predefinable end stops (51, 53) of the movable part (11) are located in front of the respectively associated predefinable position values (44, 48).

11. Method according to one of Claims 5 to 8, characterized by its use in adjuster drives in motor vehicles.

12. Method according to Claim 11, characterized by its use in sliding and tilting roofs.

## Revendications

1. Dispositif de régulation de la position d'une pièce mobile (11) à l'aide d'un capteur de position comprenant un capteur de position incrémental (12) et un capteur de position de valeur absolue (13), un capteur de valeur de consigne de position (29), un régulateur (28) et un moyen d'entraînement (10),
caractérisé en ce que
le capteur de position de valeur absolue (13)
- dans une première plage de position (42) délimitée par la première butée mécanique (43) de la pièce mobile (11) et par une première valeur de position prédéterminée (44), fournit un premier signal (40),
- dans une seconde plage de position (45) déterminée par la première valeur de position prédéterminée (44) et une valeur de référence (46), émet un second signal (41),
- dans une troisième plage de position (47) délimitée par la valeur de référence (46) de la position et par une seconde valeur de position prédéterminée (48), émet le premier signal (40),
- dans une quatrième plage de position (49) délimitée par la seconde valeur de position prédéterminée (48) et par une seconde butée mécanique (50) de la pièce mobile (11), émet le second signal (41).

2. Dispositif selon la revendication 1,
caractérisé en ce que
le capteur de position incrémental (12) comporte plusieurs segments à aimant permanent (16) coopérant avec au moins un capteur magnétosensible (17, 18).

3. Dispositif selon la revendication 1,
caractérisé en ce que
le capteur de position de valeur absolue (13) est un disque (22) ayant deux cames (23, 24) correspondant aux nombres pairs ou impairs de plages de positions (42, 47 ; 45, 49), ces cames coopérant avec des moyens de commutation (25).

4. Dispositif selon la revendication 1,
caractérisé en ce que
le capteur de position de valeur absolue comporte deux segments à aimant permanent (35, 36) qui correspondent aux plages de position paires ou impaires (42, 47 ; 45, 49) et coopèrent avec un capteur magnétosensible (39).

5. Procédé de régulation de la position d'une pièce mobile (11) à l'aide d'un dispositif de régulation de position d'une pièce mobile (11) comprenant un capteur de position formé d'un capteur de position incrémental (12) et d'un capteur de position de valeur absolue (13), un capteur de valeur de consigne de position (29) avec un régulateur (28) et un moyen d'entraînement (10), le capteur de position de valeur absolue (13)
- dans une première plage de position (42) délimitée par une première butée mécanique (43) de la pièce mobile (11) et par une première valeur de position prédéterminée (44), émet un premier signal (40),
- dans une seconde plage de position (45) délimitée par la première valeur de position prédéterminée (44) et par une valeur de référence (46) de la position, émet un second signal (41),
- dans une troisième plage de position (47) délimitée par la valeur de référence (46) de la position et par une seconde valeur de position prédéterminée (48), émet le premier signal (40),
- dans une quatrième plage de position (49) délimitée par la seconde valeur de position prédéterminée (48) et par une seconde butée mécanique (50) de la pièce mobile (11), émet le second signal (41),
et en cas de changement de sens (L, R) vers une butée de fin de course mécanique (43, 50), partant d'une plage de position (45, 47) voisine de la plage de position (42, 49) délimitée par la butée de fin de course mécanique (43, 50) et par la valeur de position prédéterminée (44, 48), et pour une variation du signal de position de valeur absolue (26 ; 40, 41), arrête le moteur électrique (10), inverse le sens de fonctionnement (L, R) et, après une nouvelle variation du signal de position de valeur absolue (26 ; 40, 41), calibre la valeur absolue de la position.

6. Procédé selon la revendication 5,
caractérisé en ce que
le capteur de position incrémental (12) comporte plusieurs segments à aimant permanent (16) coopérant avec au moins un capteur magnétosensible (17, 18).

7. Procédé selon la revendication 5,
caractérisé en ce que
le capteur de position de valeur absolue (13) est un disque (22) muni de deux cames (23, 24) correspondant aux plages de positions (42, 47 ; 45, 49) d'ordre pair ou impair, et coopérant avec des moyens de commutation (25).

8. Procédé selon la revendication 5,
caractérisé en ce que
le capteur de position de valeur absolue comporte deux segments à aimant permanent (35, 36) correspondant aux plages de positions (42, 47 ; 45, 49) d'ordre pair ou impair et coopérant avec un capteur magnétosensible (39).

9. Procédé selon l'une des revendications 5 à 8,
caractérisé en ce qu'
après une nouvelle variation du signal de position de valeur absolue (26), le moteur électrique (10) continue de tourner pendant une durée prédéterminée.

10. Procédé selon l'une des revendications 5 à 8,
caractérisé en ce que
les butées de fin de course prédéterminées (51, 53) de la pièce mobile (11) se situent en avant des valeurs de position prédéterminées (44, 48) respectives associées.

11. Procédé selon l'une des revendications 5 à 8,
caractérisé par
son application à des moyens de réglage ou actuateurs de véhicules automobiles.

12. Procédé selon la revendication 11,
caractérisé par
son application à des toits ouvrants et relevables.
